Europäisches Patentamt

(19) European Patent Office

Office européen des brevets

(11) Publication number: 0 162 927

A1

(12) **EUROPEAN PATENT APPLICATION**

published in accordance with Art. 158(3) EPC

(21) Application number: 84903995.3

(22) Date of filing: 05.11.84

Data of the international application taken as a basis:

(86) International application number:
PCT/JP84/00531

(87) International publication number:
WO85/02068 (09.05.85 85/11)

(51) Int. Cl.⁴: H 02 K 21/24

(30) Priority: 05.11.83 JP 206893/83

(43) Date of publication of application:
04.12.85 Bulletin 85/49

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: OYAMA, Shigeaki
939-82, Katakura-cho Hachioji-shi
Tokyo 192(JP)

(74) Representative: Allman, Peter John et al,
Marks and Clerk Scottish Life House Bridge Street
Manchester M3 3DP(GB)

(54) PERMANENT MAGNET TYPE AC MOTOR.

(57) An AC servo motor includes a plurality of rotor disks (26) and a plurality of stator disks (34). Each of the rotor disks (26) has a plurality of flat plate shaped permanent magnets (30) which are radially arranged within a disk substrate (28). Each of the stator disks (34) is constituted by a ring-shaped resin plate (36) fixedly covered with a winding (38). The rotor disks (26) and the stator disks (34) are alternately disposed in the axial direction of the motor in such a manner as to oppose each other. The stator disks (34) are secured to a stator housing (12). The rotor disks (26) are secured to a rotor shaft (20) which is rotatably supported by the stator housing (12).

Fig 1.

EP 0 162 927 A1

DESCRIPTION

TITLE OF THE INVENTION

Permanent Magnet Type AC Motor

TECHNICAL FIELD

The present invention relates to an AC motor, more specifically to the construction of a lightweight and compact AC permanent magnet motor capable of producing a high output torque.

BACKGROUND ART

The conventional permanent magnet type AC motor comprises a stator housing, and a practically cylindrical rotor of the permanent magnet type disposed inside the stator housing and rotatably supported by bearing means; the practically cylindrical stator being disposed inside the stator housing so as to surround the rotor and excitation windings mounted on the core of the stator. The output torque of such a permanent magnet type AC motor is proportional to the amount of the exciting current, the length of the windings, the magnetic flux density in the gap between the stator and the rotor, and the diameter of the rotor. In order to enhance the output torque of such a permanent magnet type AC motor of the conventional construction, the outside diameter of the rotor must be increased or the axial length of the rotor, hence the axial length of the motor, must be increased. Consequently, the weight and moment of inertia of the rotor and the overall size of the permanent magnet type AC motor are inevitably increased. Accordingly, the application of such a conventional way of enhancing the output torque of permanent magnet type AC motor to a small motor for driving a small mechanism or body entails practical problems. Nevertheless, the enhancement of the output torque of a small permanent magnet type AC motor is strongly desired.

DISCLOSURE OF THE INVENTION

With the purpose of solving the above-mentioned practical problems and meeting the above-mentioned needs, it is an object of the present invention to provide a permanent magnet type AC motor having a high stator current capacity, capable of producing a sufficiently large torque, and having a rotor of a weight, diameter and moment of inertia which are reduced to the most possible extent.

It is a further object of the present invention to provide a lightweight permanent magnet type AC motor employing a resin core instead of a ferrous core.

The present invention provides a permanent magnet type AC motor comprising: a stator housing; a rotor shaft rotatably supported on the stator housing; a plurality of rotor disks axially arranged on the rotor shaft, each comprising an elemental disk and a plurality of permanent magnets radially arranged in the elemental disk; a plurality of stator disks secured to the stator housing, each provided with a stator winding covered with and fixed thereto with an annular resin plate, wherein a plurality of the rotor disks and a plurality of the stator disks are disposed alternately along the longitudinal axis of the rotor shaft so as to face one another with a flat clearance therebetween.

BRIEF DESCRIPTION OF THE DRAWINGS

Figure 1 is a longitudinal sectional front elevation of a permanent magnet type AC motor according to an embodiment of the present invention;

Fig. 2 is a partially sectional side elevation of the motor of Fig. 1; and

Fig. 3 is a schematic front elevation of a rotor disk employed in the motor of Fig. 1.

BEST MODE FOR CARRYING OUT THE INVENTION

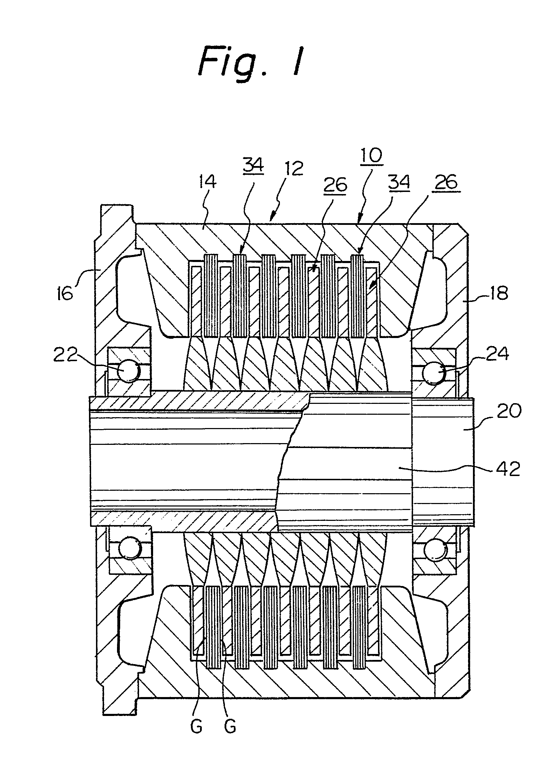

Figures 1 to 3 illustrate a permanent magnet type AC motor embodying the present invention. Referring to Figs. 1 to 3, the stator housing 12 of a permanent magnet type AC motor 10 includes a cylindrical center housing 14 and side housings 16 and 18 fixed to opposite ends of the center housing 14, respectively. A rotor shaft 20 extending axially within the center housing 14 is rotatably supported by bearings 22 and 24 in the side housings 16 and 18.

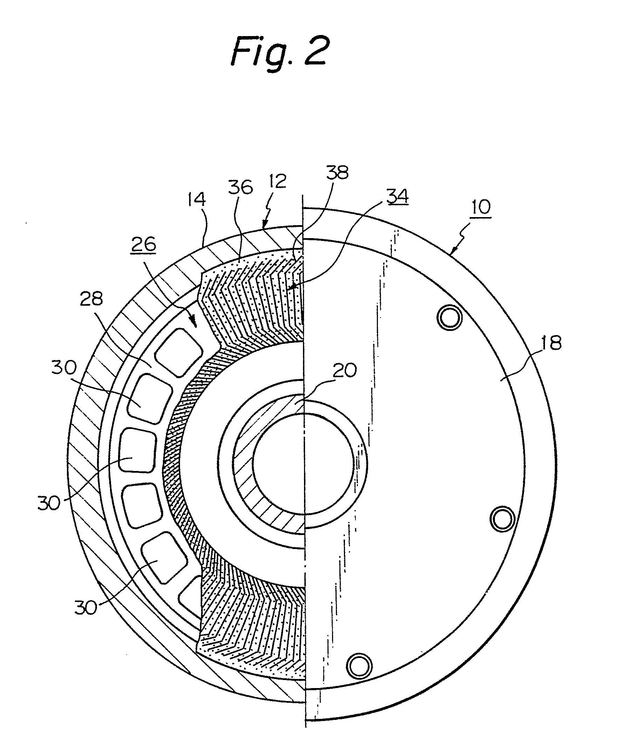

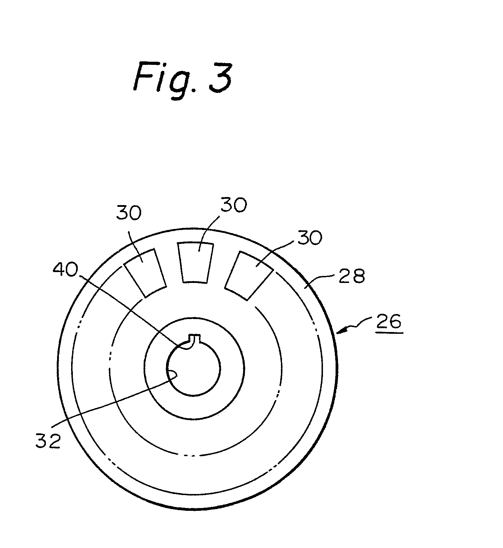

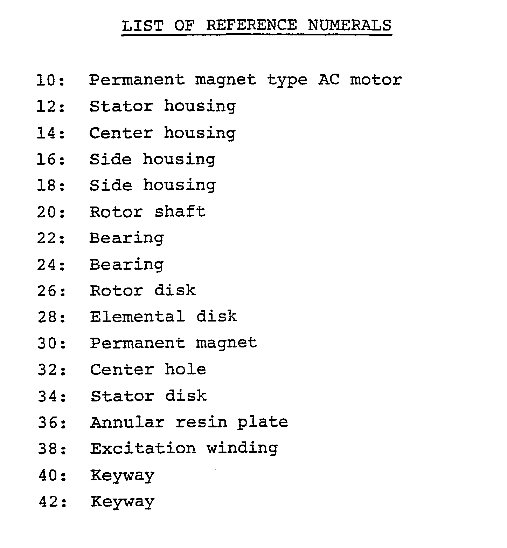

As shown in Figs. 2 and 3, rotor disks 26, namely, elements of the rotor, mounted on the rotor shaft 20 each includes an elemental disk 28 and a plurality of flat permanent magnets 30 arranged in a radial disposition and at equal angular intervals in the elemental disk 28. The elemental disk 28 can be made of a resin, aluminum or the like in a lightweight structure.

The opposite sides of the flat permanent magnet 30 are exposed in the opposite sides of the corresponding rotor disk 26 and constitute an S-pole and an N-pole respectively. The elemental disk 28 is provided with a center hole 32 (Fig. 3) for receiving the rotor shaft 20 therethrough. The thickness of the wall of the elemental disk 28 around the center hole 32 is greater than that of the wall of the peripheral area of the same and that of the permanent magnet 30, so that the rotor disk 26 is held securely on the rotor shaft 20.

Referring to Figs. 1 and 2, a stator disk 34 includes an excitation winding 38 and an annular resin plate 36 covering and fixing the excitation winding 38. Preferably, the resin plate 36 is a fiber reinforced resin plate, reinforced by reinforcing fibers such as glass fibers or carbon fibers.

In this embodiment, although not restricted to this number, seven rotor disks 26 and six stator disks 34 are disposed alternately along the longitudinal rotor axis so that the side surface of the permanent magnets of the rotor disks 26 face the windings 38 of the stator disks 34 with a flat gap therebetween.

The stator disks 34 are fixed to the center housing 14, while the rotor disks 26 are fixedly mounted on the rotor shaft 20.

In this embodiment, keyways 40 and 42 are formed in the rotor disks 26 and in the rotor shaft 20 respectively and a key, not shown, in seated in the keyways 40 and 42 to restrict the rotation of the rotor disks 26 relative to the rotor shaft 20. However, the rotor disks 26 may be restrained from rotation relative to the rotor shaft 20 by a protrusion formed therein so as to fit in the keyway 42 of the rotor shaft 20 or by any other fixing means.

Generally, the output torque of a permanent magnet type AC motor is proportional to the total stator current, the length of the windings, the magnetic flux density, and the diameter of the rotor. In the permanent magnet type AC motor of the above-mentioned constitution, the stator need not be formed so as to surround the rotor disks 26. Accordingly, the permanent magnet type AC motor of the present invention is able to employ rotor disks of a diameter greater than that of the rotor disks of a conventional permanent magnet type AC motor of the same outside diameter. Thus, the constitution of the present invention effectively enhances the output torque. Furthermore, since the rotor disks 26 and the stator disks 34 are disposed alternately along the longitudinal axis of the rotor shaft 20, the area of the surface of the rotor disks 26 of the rotor 20 corresponding to the surface of the stator disks 34 is greater than that of a rotor of the conventional construction having the same length as that of the rotor 20 of the present invention. Accordingly, the total stator current and the length of the stator windings that cause the rotor to start rotation can be increased, and hence the output torque of the permanent magnet type AC motor can be enhanced. On the other hand, according to the present invention, the rotor disks 26 can be formed so that the total weight thereof is smaller than that of a conventional rotor of the same axial length as that of the rotor having the rotor disks 26. Consequently, the moment of inertia of the rotor of the present invention is smaller than that of the corresponding conventional rotor. Accordingly, the starting and stopping characteristics of the permanent magnet type AC motor according to the present invention are improved, and hence the motor of the present invention can be used for driving a small mechanism or body without any practical problem.

Particularly, since the permanent magnet type AC motor of the above-mentioned constitution employs the stator disks 34 each consisting of the winding 38 and the annular resin plate 36 covering and fixing the winding 38, and does not need any ferrous core, the space factor for the windings 38 is improved. That is, since the stator disk 34 of the present invention is provided with the winding 38 expanded into a space occupied by the ferrous core in the conventional AC motor, the total stator current can be increased, and hence the output torque is enhanced.

Although the present invention has been described with reference to a preferred embodiment thereof, the present invention is not limited thereto and may be embodied in several forms without departing from the spirit and scope thereof as set forth in the accompanying claims.

As apparent from the above description, since the present invention provides a permanent magnet type AC motor comprising: a stator housing; a rotor shaft rotatably supported on the stator housing; a plurality of rotor disks axially arranged on the rotor shaft, each including an elemental disk and a plurality of permanent magnets radially arranged in the elemental disk; a plurality of stator disks secured to the stator housing, each provided with a stator winding covered with and fixed thereto with an annular resin plate, wherein a plurality of the rotor disks and a plurality of the stator disks are disposed alternately along the longitudinal rotor axis so as to face one another with a flat clearance therebetween, the present invention reduces the total weight and the moment of inertia of the rotor to the most possible extent, while the present invention gives a sufficiently large torque capacity to the permanent magnet type AC motor and enhances the stator current capacity, namely, enables the supply of an increased excitation current to the windings of the stator.

Furthermore, since the above-mentioned constitution according to the present invention is able to enhance the torque capacity of a permanent magnet type AC motor without increasing the overall size of the same, this constitution is applicable to enhancing the output capacity of a compact permanent magnet type AC motor. Still further, the employment of resin material or aluminum contributes to the construction of a lightweight motor.

CLAIMS

1. A permanent magnet type AC motor comprising: a stator housing; a rotor shaft rotatably supported on said stator housing; a plurality of rotor disks axially arranged on said rotor shaft, each including an elemental disk and a plurality of flat permanent magnets radially arranged in said elemental disk; a plurality of stator disks secured to said stator housing, each provided with a stator winding covered with and fixed thereto with an annular resin plate, wherein said plurality of rotor disks and plurality of stator disks are axially and alternately disposed so as to face one another with a flat clearance therebetween.

2. A permanent magnet type AC motor according to claim 1, wherein said annular resin plate is reinforced by reinforcing fibers.

3. A permanent magnet type AC motor according to claim 1, wherein the elemental disk of said rotor disk is made of a resin.

4. A permanent magnet type AC motor according to claim 1, wherein the elemental disk of said rotor disk is an aluminum disk.

5. A permanent magnet type AC motor according to claim 1, wherein the elemental disk of said rotor disk has a thick portion surrounding the center hole thereof for receiving said rotor shaft therethrough and a thin perpheral portion surrounding said central portion.

6. A permanent magnet type AC motor according to claim 1, wherein each said permanent magnet or said rotor disk is disposed in the elemental disk with the N-pole and the S-pole thereof exposed in the opposite sides of said elemental disk, respectively.

1

*Fig. I*

0162927

# Fig. 2

0162927

# Fig. 3

0162927

- 4 -

## LIST OF REFERENCE NUMERALS

10: Permanent magnet type AC motor
12: Stator housing
14: Center housing
16: Side housing
18: Side housing
20: Rotor shaft
22: Bearing
24: Bearing
26: Rotor disk
28: Elemental disk
30: Permanent magnet
32: Center hole
34: Stator disk
36: Annular resin plate
38: Excitation winding
40: Keyway
42: Keyway

0162927

# INTERNATIONAL SEARCH REPORT

International Application No. PCT/JP84/00531

**I. CLASSIFICATION OF SUBJECT MATTER** (if several classification symbols apply, indicate all) [3]

According to International Patent Classification (IPC) or to both National Classification and IPC

Int.Cl[4] H02K21/24

**II. FIELDS SEARCHED**

| Minimum Documentation Searched [4] | |
|---|---|
| Classification System | Classification Symbols |
| IPC | H02K21/24, H02K1/28, H02K3/30 H02K15/12 |

| Documentation Searched other than Minimum Documentation to the Extent that such Documents are Included in the Fields Searched [5] | | |
|---|---|---|
| Jitsuyo Shinan Koho | 1926 – 1984 | |
| Kokai Jitsuyo Shinan Koho | 1971 – 1984 | |

**III. DOCUMENTS CONSIDERED TO BE RELEVANT** [14]

| Category [*] | Citation of Document, [16] with indication, where appropriate, of the relevant passages [17] | Relevant to Claim No. [18] |
|---|---|---|
| X, Y | JP, A, 47-29806 (Mitsubishi Electric Corp.) 7 November 1972 (07. 11. 72) | 1 – 6 |
| X, Y | US, A, 3,700,943 (Ford Motor Co.) 24 October 1972 (24. 10. 72) | 1 – 6 |
| Y | JP, A, 49-43102 (Matsushita Electric Industrial Co., Ltd.) 23 April 1974 (23. 04. 74) | 2 |
| Y | JP, U, 48-6502 (Hitachi, Ltd.) 25 January 1973 (25. 01. 73) | 4 |
| Y | JP, B1, 40-24730 (Westinghouse Electric Corp.) 28 October 1965 (28. 10. 65) | 5 |

\* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| January 21, 1985 (21. 01. 85) | January 28, 1985 (28. 01. 85) |
| International Searching Authority [1] | Signature of Authorized Officer [20] |
| Japanese Patent Office | |

Form PCT/ISA/210 (second sheet) (October 1981)